# EUROPEAN PATENT APPLICATION

(11) **EP 4 745 108 A1**
(43) Date of publication of application: **20.05.2026**
(21) Application number: 24872416.3
(22) Date of filing: 26.09.2024
(51) Int. Cl.: C04B 28/02, C04B 14/26, C04B 22/10

(54) **HYDRAULIC COMPOSITE**

(30) Priority: 27.09.2023 JP 2023165005
(71) Applicant: Taiheiyo Cement Corporation, Bunkyo-ku Tokyo 112-8503 (JP)
(72) Inventor: TABA, Hiromichi, Tokyo 112-8503 (JP); OKADA, Akiya, Tokyo 112-8503 (JP); HAYAKAWA, Takayuki, Tokyo 112-8503 (JP)
(74) Representative: Isarpatent
(86) International application number: PCT/JP2024/034469
(87) International publication number: WO 2025/070631

(57) **Abstract**

The present invention relates to a hydraulic composite comprising at least a carbonated cement hydrate slurry having a water/carbonated cement hydrate (in terms of solids) ratio of 50% to 1000%, a pH of 11 or less, and a viscosity at 20 ± 3°C of 1.0 mPa·s to 6.5 mPa·s, or powder of the carbonated cement hydrate, and also cement, aggregate, and water, wherein the aggregate is fine aggregate alone, or fine aggregate and coarse aggregate. The present invention also relates to a hydraulic composite containing at least 5 parts by mass to 50 parts by mass of the carbonated cement hydrate (in terms of solids) in the carbonated cement hydrate slurry or powder of the carbonated cement hydrate (in terms of solids), 250 parts by mass to 750 parts by mass of aggregate, and 25 parts by mass to 60 parts by mass of water, per 100 parts by mass of cement.

## Description

### Technical Field

The present invention relates to hydraulic composites that are concrete and mortar (hereinafter referred to as "hydraulic composites") and have high strength development and fluidity.

Chemicals such as calcium nitrite have conventionally been used to improve the strength of hydraulic composites.

For example, the invention described in PTL 1 relates to a hydraulic material (hydraulic composite) with a content ratio of blast furnace slag powder of more than 60%, the hydraulic material including one or more of calcium nitrite, calcium chloride, magnesium carbonate, and magnesium chloride. The above inorganic salts are said to compensate for the loss of strength caused by the reduction in the proportion of Portland cement used in the hydraulic material that is aimed at the reduction in carbon dioxide emissions.

Furthermore, the invention described in PTL 2 relates a strength improver for cement that contains a cyclic imino ether group-containing compound (A) having a cyclic imino ether group represented by general formula (1). The strength of concrete using this improver is said to be significantly improved over a long term.

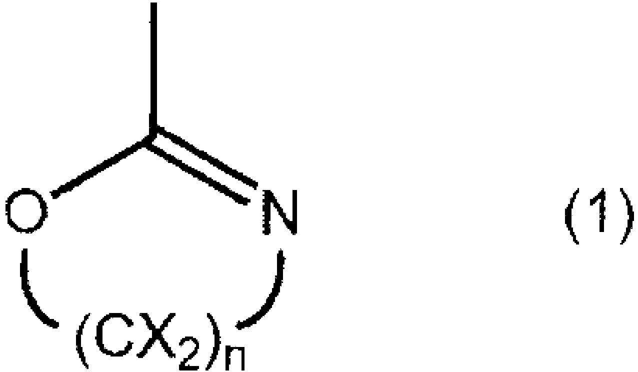

In general formula (1), X independently represents a hydrogen atom or a hydrocarbon group having 1 to 18 carbon atoms, and n represents an integer from 1 to 5.

However, inorganic compounds such as calcium nitrite described in PTL 1 reduce the fluidity of hydraulic composites, and chlorides corrode rebars in hydraulic composites. Furthermore, the cyclic imino ether group-containing compound described in PTL 2 is expensive.

Various polymeric compounds have also been proposed as agents for improving the fluidity of concrete.

For example, the invention described in PTL 3 relates to a copolymer cement dispersant obtained by copolymerizing the following (a), (b), and (c), which is said to enable the demonstration of high fluidity and workability.

### (a): A polyalkylene glycol mono(meth)acrylate-based monomer represented by general formula (2).

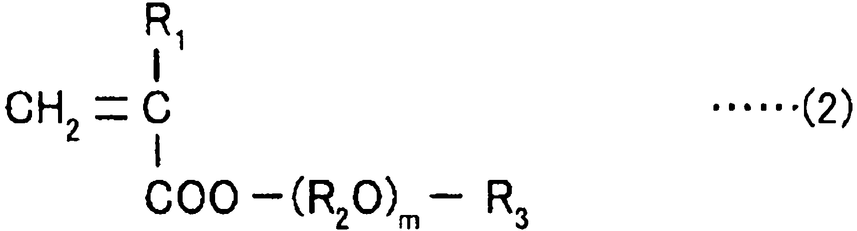

In general formula (2), R₁ represents a hydrogen atom or a methyl group, R₂O represents an oxyethylene group or an oxypropylene group, m represents an integer from 1 to 25, and R₃ represents hydrogen or an alkyl group having 1 to 3 carbon atoms.

### (b): A carboxylic acid-based monomer represented by general formula (3).

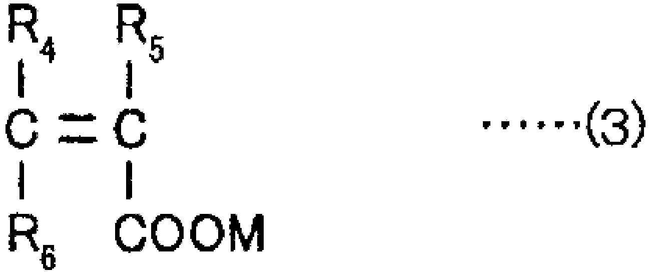

In general formula (3), R₄, R₅, and R₆ represent hydrogen, a methyl group, or (CH₂)nCOOM (n represents an integer from 0 to 2), and M represents a hydrogen atom, a monovalent metal atom, a divalent metal atom, an ammonium group, or an organic amine group.

### (c): Other monomers copolymerizable with (a) and/or (b).

The invention described in PTL 4 relates to a cement additive obtained by blending 5 parts by weight to 30 parts by weight of a water-soluble salt of polyvinyl alcohol sulfate with 100 parts by weight of a compound primarily containing a naphthalene sulfonic acid formaldehyde condensate. This additive is said to improve the fluidity of cement mixtures, prevent fluidity deterioration over time, and improve operability and workability.

However, the polymer compounds described in PTL 3 and PTL 4 are all expensive.

Currently, measures to reduce greenhouse gases such as carbon dioxide are being explored on a global scale to prevent global warming. In particular, reducing carbon dioxide emissions is an urgent issue in the cement production industry, which accounts for approximately 4% (400 million tons) of Japan's total industrial carbon dioxide emissions. Carbon dioxide reduction technologies currently employed in the cement production industry mainly involve reducing production energy and separating and capturing carbon dioxide from factory exhaust gases.

More recently, there has been active development of technologies that utilize carbon dioxide absorption and fixation properties of cement hydrates contained in concrete to fix carbon dioxide by using concrete containing such hydrates.

For example, the technology described in NPL 1 involves forcibly carbonating a molded concrete product in a curing tank to fix a large amount of carbon dioxide in the concrete.

Furthermore, the invention described in PTL 5 relates to a method for producing a cement composition, the method including a step for kneading a portion of cement with water to obtain a cement slurry with a specific water-cement ratio, a step for supplying carbon dioxide into the cement slurry to obtain a carbon dioxide-containing slurry, and a step for kneading the carbon dioxide-containing slurry, the remainder of the cement, and aggregate to obtain a cement composition. This production method has the advantage of being able to fix more carbon dioxide than methods for producing cement compositions obtained by adding cement all at once.

The step for obtaining a carbon dioxide-containing slurry in the invention described in PTL 5 produces a large amount of cement hydrate (hereinafter referred to as "carbonated cement hydrate") that has absorbed and fixed carbon dioxide. However, the effect of carbonated cement hydrate on the physical properties of concrete is unknown.

Furthermore, since carbonated cement hydrate is hydrated and carbonated, it has generally been thought that the hydrate is merely a substance with reduced hydration activity and is only useful as a filler (extender).

### Citation List

### Patent Literature

PTL 1: Japanese Patent Application Publication No. 2022-179954
PTL 2: Japanese Patent Application Publication No. 2021-46338
PTL 3: Japanese Patent Application Publication No. 2009-242197
PTL 4: Japanese Patent Application Publication No. S61-83659
PTL 5: Japanese Patent Application Publication No. 2023-6313

### Non Patent Literature

NPL 1: Torichigai, Takeshi et al., "CO2 Balance and Quality Evaluation of Carbonated Cured Concrete", Proceedings of the Japan Concrete Institute, 2012, 34(1), p. 1450-1455

### Summary of Invention

### Technical Problem

Therefore, an object of the present invention is to provide new uses for the carbonated cement hydrate other than as a filler.

### Solution to Problem

In order to develop new uses for the carbonated cement hydrate, the inventors closely examined the properties of the hydrate and have found that hydraulic composites containing the hydrate exhibit improved strength development and fluidity, this finding leading to the completion of the present invention. Specifically, the present invention relates to a hydraulic composite having the following features.
[1] A hydraulic composite comprising at least a carbonated cement hydrate slurry having a water/carbonated cement hydrate (in terms of solids) ratio of 50% to 1000%, a pH of 11 or less, and a viscosity at 20 ± 3°C of 1.0 mPa·s to 6.5 mPa·s, or a powder of the carbonated cement hydrate, and also cement, aggregate, and water.
[2] The hydraulic composite according to [1] above, wherein the aggregate is fine aggregate alone, or fine aggregate and coarse aggregate.
[3] The hydraulic composite according to [1] or [2] above, comprising at least 5 parts by mass to 50 parts by mass of the carbonated cement hydrate (in terms of solids) in the carbonated cement hydrate slurry or powder of the carbonated cement hydrate (in terms of solids), 250 parts by mass to 750 parts by mass of aggregate, and 25 parts by mass to 60 parts by mass of water, per 100 parts by mass of cement.
[4] The hydraulic composite according to [3] above, wherein the fine aggregate accounts for 35% by mass to 65% by mass, with the total aggregate being 100% by mass.
[5] The hydraulic composite according to [1] or [2] above, comprising at least 100 parts by mass of cement, 250 parts by mass to 750 parts by mass of aggregate, a carbonated cement hydrate slurry or powder of the carbonated cement hydrate, and water, wherein
   the hydraulic composite contains at least 5 parts by mass to 30 parts by mass of the carbonated cement hydrate (in terms of solids) in the carbonated cement hydrate slurry or powder of the carbonated cement hydrate, and 25 parts by mass to 60 parts by mass of water, per 100 parts by mass of fine aggregate in the aggregate.
[6] The hydraulic composite according to [1] or [2] above, wherein a compressive strength of the hydraulic composite at age of 3 days, age of 28 days, and age of 91 days is 0.5% or more higher than the compressive strength of a hydraulic composite not containing the carbonated cement hydrate slurry or powder of the carbonated cement hydrate.
[7] The hydraulic composite according to [1] or [2] above, having a slump flow of 350 mm to 700 mm as measured in accordance with JIS A 1150 "Method of Test for Slump Flow of Concrete".
[8] The hydraulic composite according to [1] or [2] above, containing a carbonated cement hydrate slurry or powder of the carbonated cement hydrate, which is obtained by fixing carbon dioxide emitted during the cement production process.

### Advantageous Effects of Invention

The hydraulic composite of the present invention has high strength development and fluidity. Furthermore, the carbonated cement hydrate slurry and powder of the carbonated cement hydrate contained in the hydraulic composite of the present invention absorb and fix carbon dioxide, thereby contributing to the reduction of carbon dioxide emissions.

### Brief Description of Drawings

[Fig. 1]

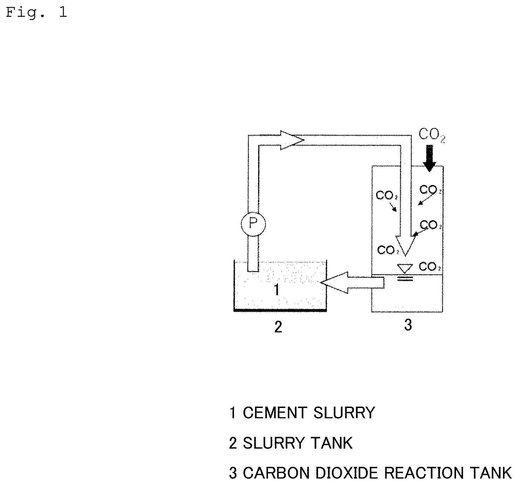

Fig. 1 is a schematic diagram of a carbonated cement hydrate slurry production apparatus.

### Description of Embodiments

As described above, the present invention relates to a hydraulic composite comprising at least a carbonated cement hydrate slurry having a water/carbonated cement hydrate (in terms of solids) ratio of 50% to 1000%, a pH of 11 or less, and a viscosity at 20 ± 3°C of 1.0 mPa·s to 6.5 mPa·s, or a powder of the carbonated cement hydrate, and also cement, aggregate, and water.

The carbonated cement hydrate slurry, powder of the carbonated cement hydrate, hydraulic composite, and a method for producing the powder of the carbonated cement hydrate are described below.

### 1. Carbonated Cement Hydrate Slurry and Powder of the Carbonated Cement Hydrate

The water/carbonated cement hydrate (in terms of solids) ratio used in the present invention is 50% to 1000%. When this ratio is within the above range, the hydraulic composite exhibits high strength development and fluidity. The ratio is preferably 80% to 900%, more preferably 100% to 800%.

The water referred to above is the water in the carbonated cement hydrate slurry, and the mass of the carbonated cement hydrate (in terms of solids) refers to the mass of the solids in the slurry.

However, as described below, the carbonated cement hydrate slurry may be decanted. In this case, the ratio refers to the water/carbonated cement hydrate (in terms of solids) ratio after decantation [corresponding to W₂/C₂ in Table 3 below].

Furthermore, the pH of the carbonated cement hydrate slurry is 11 or less. Where the pH is 11 or less, the content ratio of carbon dioxide in the carbonated cement hydrate is 125 kg or more per 1 ton of cement, and similarly, the strength development and fluidity of the hydraulic composite are high. The pH is preferably 6 to 10, more preferably 7 to 9.

Furthermore, the viscosity of the carbonated cement hydrate slurry at 20 ± 3°C is 1.0 mPa·s to 6.5 mPa·s. Where the viscosity is within this range, the hydraulic composite has high strength development and fluidity. The viscosity is preferably 2.0 mPa·s to 6.0 mPa·s, and more preferably 3.0 mPa·s to 5.0 mPa·s.

Furthermore, the Blaine specific surface area of the powder of the carbonated cement hydrate is preferably 5,000 cm²/g to 15,000 cm²/g. Where the Blaine specific surface area is within this range, the hydraulic composite has high strength development and fluidity. The Blaine specific surface area is more preferably 6,000 cm²/g to 14,500 cm²/g, and even more preferably 7,000 cm²/g to 14,000 cm²/g.

The cement is at least one selected from ordinary Portland cement, high-early-strength Portland cement, extra-high-early-strength Portland cement, moderate-heat Portland cement, low-heat Portland cement, blast-furnace cement, and fly ash cement. The cement hydrate is at least one selected from cement hydrate contained in ready-mixed concrete sludge, cement hydrate contained in waste concrete, and cement hydrate contained in aerated lightweight concrete (ALC) scrap.

Examples of the carbonated cement hydrate include calcium silicate hydrate (CaO-SiO₂-H₂O), calcium hydroxide (Ca(OH)₂), ettringite (3CaO·Al₂O₃·3CaSO₄·32H₂O), calcium aluminate hydrate (3CaO·Al₂O₃·6H₂O), and monosulfate hydrate (3CaO·Al₂O₃·CaSO₄·12H₂O).

### 2. Hydraulic Composite

The hydraulic composite of the present invention contains, per 100 parts by mass of cement (corresponding to C₁ in Table 3 below), at least 5 parts by mass to 50 parts by mass of carbonated cement hydrate (in terms of solids, corresponding to C₂ in Table 3 below) in a carbonated cement hydrate slurry or powder of the carbonated cement hydrate (in terms of solids, corresponding to C₂ in Table 3 below), 250 parts by mass to 750 parts by mass of aggregate, and 25 parts by mass to 60 parts by mass of water (corresponding to W₁ + W₂ in Table 3 below).

Where the carbonated cement hydrate (in terms of solids) in the carbonated cement hydrate slurry or powder of the carbonated cement hydrate (in terms of solids) is 5 parts by mass to 50 parts by mass per 100 parts by mass of cement, the hydraulic composite exhibits high strength development and fluidity. Furthermore, when the aggregate is 250 parts by mass to 750 parts by mass per 100 parts by mass of cement, the hydraulic composite exhibits high fluidity.

The aggregate is fine aggregate alone when the hydraulic composite is mortar, and fine and coarse aggregates when the hydraulic composite is concrete.

The fine aggregate can be one or more selected from river sand, mountain sand, land sand, sea sand, crushed sand, silica sand, slag fine aggregate, lightweight fine aggregate, etc., while the coarse aggregate can be one or more selected from gravel, crushed stone, slag coarse aggregate, lightweight coarse aggregate, etc. Both the fine and coarse aggregates can be natural aggregates or recycled aggregates.

The fine aggregate content in the aggregate is preferably 35% by mass to 65% by mass, with the aggregate as 100% by mass. With the fine aggregate content within this range, the hydraulic composite has good fluidity. The content ratio of fine aggregate is more preferably 40% by mass to 60% by mass, with the aggregate as 100% by mass.

The hydraulic composite of the present invention is a hydraulic composite containing at least 100 parts by mass of cement, 250 parts by mass to 750 parts by mass of aggregate, a carbonated cement hydrate slurry or powder of the carbonated cement hydrate, and water, and contains at least 5 parts by mass to 30 parts by mass of the carbonated cement hydrate (in terms of solids) in the carbonated cement hydrate slurry or powder of the carbonated cement hydrate, and 25 parts by mass to 60 parts by mass of water, per 100 parts by mass of fine aggregate in the aggregate. Where the carbonated cement hydrate (in terms of solids) in the carbonated cement hydrate slurry or powder of the carbonated cement hydrate is in an amount of 5 parts by mass to 30 parts by mass per 100 parts by mass of fine aggregate, the hydraulic composite has high strength development and fluidity.

The water can be any water that does not adversely affect the strength, fluidity, and other physical properties of the hydraulic composite. Examples include one or more types selected from tap water, industrial water, supernatant water from ready-mixed concrete, and recycled water.

The content ratio of water (corresponding to W₁ + W₂ in Table 3 below) is preferably 25 parts by mass to 60 parts by mass per 100 parts by mass of cement. The content ratio of water within this range ensures good fluidity of the hydraulic composite. The content ratio of water is more preferably 30 parts by mass to 50 parts by mass per 100 parts by mass of cement.

As shown in Table 3 below, the compressive strength of the hydraulic composite of the present invention at age of 3 days, age of 28 days, and age of 91 days is 0.5% or more higher than the compressive strength of hydraulic composites that do not contain carbonated cement hydrate slurry or powder of the carbonated cement hydrate.

The hydraulic composite of the present invention has a slump flow of 350 mm to 700 mm as measured in accordance with JIS A 1150 "Method of Test for Slump Flow of Concrete". Furthermore, in the present invention, the carbon dioxide used to carbonate the cement slurry is preferably carbon dioxide emitted during cement production, in order to reduce carbon dioxide emissions during cement production process.

In addition to the above essential components, the hydraulic composite of the present invention may contain one or more admixtures such as shrinkage-reducing agents, water-reducing agents, and AE water-reducing agents, or admixtures such as expansive agents, blast furnace slag, fly ash, coal ash, silica fume, silica powder, and limestone powder, depending on the required durability performance, such as suppression of cracking, prevention of salt damage, and improvement of freeze-thaw resistance.

### 3. Method for Producing Powder of Carbonated Cement Hydrate

A method for producing powder of the carbonated cement hydrate of the present invention includes a step for kneading cement and water at a water/cement ratio of 50% to 1000%, or cement hydrate and water at a water/cement hydrate ratio of 50% to 1000%, to obtain a cement hydrate slurry, a step for supplying carbon dioxide to the cement hydrate slurry to obtain a carbonated cement hydrate slurry, and a step for drying the carbonated cement hydrate slurry to obtain the carbonated cement hydrate powder.

The cement is one or more selected from ordinary Portland cement, high-early-strength Portland cement, ultrahigh-early-strength Portland cement, moderate-heat Portland cement, low-heat Portland cement, blast furnace cement, and fly ash cement, and the cement hydrate is one or more selected from cement hydrate contained in ready-mixed concrete sludge, cement hydrate contained in waste concrete, and cement hydrate contained in aerated lightweight concrete (ALC) scraps.

In the step for obtaining the carbonated cement hydrate slurry, carbon dioxide is supplied so that the pH of the carbonated cement hydrate slurry is 11 or less. Where the pH of the carbonated cement hydrate slurry is within the above range, the content ratio of carbon dioxide in the carbonated cement hydrate slurry is 125 kg or more per 1 ton of cement, as described above, and the fixed amount of carbon dioxide increases.

In the step for obtaining the carbonated cement hydrate slurry, carbon dioxide is supplied so that the viscosity of the carbonated cement hydrate slurry measured with a rotational viscometer (ambient temperature during measurement: 20 ± 3°C) is preferably 1.0 mPa·S to 6.5 mPa·S. Similarly, where the viscosity is within the above range, the fixed amount of carbon dioxide increases. In adjusting the viscosity of the slurry, where the viscosity is less than 1.0 mPa·S, water may be removed from the slurry by drying, decantation, or the like. Where the viscosity exceeds 6.5 mPa·S, water may be added to the slurry.

In the step for obtaining the carbonated cement hydrate slurry, it is preferable to fix 80% by mass or more of the supplied carbon dioxide. The fixed amount of carbon dioxide of 80% by mass or more of carbon dioxide results in high carbon dioxide fixation efficiency, contributing to carbon dioxide reduction.

Furthermore, in the step for obtaining the powder of the carbonated cement hydrate, a method for drying the carbonated cement hydrate slurry can include one or more methods selected from natural drying, hot air drying, vacuum drying, refrigeration drying, infrared drying, freeze drying, and contact drying. The above drying methods allow drying without decarbonating the carbon dioxide fixed in the carbonated cement hydrate.

### EXAMPLES

The present invention is described hereinbelow by using examples, but the present invention is not limited to these examples.

### 1. Materials Used

The materials used are listed in Table 1.

**[Table 1]**

| Material | Symbol | Type | Physical properties |
|---|---|---|---|
| Cement | **C** | Ordinary Portland cement | Density: **3.16g**/cm³ |
| Fine aggregate | **S** | Mountain sand produced in Shizuoka Prefecture | Density: **2.61g/cm³,** Water absorption ratio: **1.59%** |
| Coarse aggregate | **G** | Crushed stone produced in baraki Prefecture | Density: **2.64g/cm³,** Water absorption ratio: **0.54%** |
| AE water-reducing agent | **Ad** | Composite of lignosulfonic acid salt and polycarboxylic acid ether | - |
| Mixing water | **W** | Tap water | Density: **1.00g**/cm³ |
| Carbon dioxide | **CO₂** | Liquified carbon dioxide gas recovered from waste gas emitted during cement production | - |

### 2. Example of Using Carbonated Cement Hydrate Slurry as Partial Cement Substitute

### (1) Production of Carbonated Cement Hydrate Slurry

Ten batches of cement hydrate slurries were prepared by mixing 10 kg of ordinary Portland cement and 30 kg of tap water for 120 sec using a hand mixer. The temperature of the slurry was 23°C (ambient temperature was 20°C).

Next, as shown in Fig. 1, the cement hydrate slurry was circulated using a pump between a carbon dioxide reaction tank filled with carbon dioxide gas and a slurry tank, and the cement hydrate in the slurry was carbonated until the pH of the slurry reached the value shown in Table 2.

Next, the carbonated cement hydrate slurry was allowed to stand for one day in an environment at 20°C, and the supernatant water was decanted off to produce a carbonated cement hydrate slurry with a water/carbonated cement hydrate (in terms of solids) ratio [W₂/C₂ in Table 3] of 100%. The mass of water removed by decantation was calculated using the mass of carbonated cement hydrate (solids) determined by drying the carbonated cement hydrate slurry at 105°C for 24 h and a water/carbonated cement hydrate (in terms of solids) ratio [W₂/C₂ in Table 3] of 100%.

The physical properties (pH and viscosity) of the carbonated cement hydrate slurries thus obtained are shown in Table 2. The temperature of the carbonated cement hydrate slurry during viscosity measurement was 21°C (ambient temperature: 20°C).

**[Table 2]**

| Carbonated cement hydrate slurry | Physical properties of carbonated cement hydrate slurry | |
|---|---|---|
| | **pH** | Viscosity (mPa·s) |
| **a1** | **10.10** | **2.02** |
| **a2** | **6.83** | **3.32** |
| **a3** | **8.77** | **1.60** |
| **a4** | **8.62** | **4.23** |
| **a5** | **8.56** | **2.36** |
| **a6** | | |
| **a7** | | |
| **a8** | | |
| **a9** | | |
| **b1** | **11.10** | **1.40** |
| **b2** | **8.94** | **7.21** |

As shown in Table 2, the pH of carbonated cement hydrate slurries a1 to a9 ranged from 6.83 to 10.10 and the viscosity ranged from 1.60 mPa·s to 4.23 mPa·s. In comparison, carbonated cement hydrate slurry b1 had a viscosity of 1.40 mPa·s, similar to the above slurries, but a higher pH of 11.10. Conversely, carbonated cement hydrate slurry b2 had a pH of 8.94, similar to the above slurries, but a higher viscosity of 7.21 mPa·s.

### (2) Production of Concrete (Hydraulic Composite)

Concrete was produced according to the formulations shown in Table 3 and in accordance with JIS A 1138, "Method of Making Test Sample of Concrete in the Laboratory". That is, in Examples 1 to 9 and Comparative Examples 2 and 3, concrete was produced by mixing carbonated cement hydrate slurries according to formulations in Table 3, while in Comparative Example 1, concrete was produced using cement alone without blending carbonated cement hydrate slurry.

### (3) Measurement of Compressive Strength and Slump Flow of Concrete

The compressive strength of the concrete was measured in accordance with JIS A 1108, "Method of Test for Compressive Strength of Concrete" using concrete specimens cured underwater for age of 3 days, age of 28 days, and age of 91 days. The slump flow of the concrete was measured in accordance with JIS A 1150, "Method of Test for Slump Flow of Concrete". The results are shown in Table 3.

**[Table 3]**

| | Carbonated cement hydrate slurry | (W₁+W₂₎/(C₁ + C₂) (%) | Unit amount (kg/m³) | | | | | | | Compressive strength(MPa) | | | Slump flow (mm) |
|---|---|---|---|---|---|---|---|---|---|---|---|---|---|
| | | | W₁ | C₁ | Carbonated cement hydrate slurry | | S | G | Ad (C × %) | Age of 3 days | Age of 28 days | Age of 91 days | |
| | | | | | W₂ | C₂ | | | | | | | |
| Example 1 | a1 | | 122 | 504 | 56 | 56 | | | | 61.4 | 72.1 | 86.4 | 501 |
| Example 2 | a2 | | | | | | | | | 61.2 | 71.9 | 84.9 | 506 |
| Example 3 | a3 | | | | | | | | | 60.2 | 70.2 | 84.2 | 520 |
| Example 4 | a4 | | | | | | | | | 60.7 | 71.4 | 84.7 | 498 |
| Example 5 | a5 | | 140 | 532 | 28 | 28 | | | | 59.4 | 71.5 | 84.5 | 500 |
| Example 6 | a6 | 30 | 112 | 504 | 56 | 56 | 832 | 887 | 1.2 | 61.5 | 73.5 | 87.4 | 512 |
| Example 7 | a7 | | 84 | 476 | 84 | 84 | | | | 63.1 | 75.9 | 89.5 | 497 |
| Example 8 | a8 | | 56 | 448 | 112 | 112 | | | | 61.2 | 74.6 | 87.7 | 500 |
| Example 9 | a9 | | 0 | 392 | 168 | 168 | | | | 61.1 | 72.3 | 86.1 | 513 |
| Comparative Example 1 | - | | 168 | 560 | - | - | | | | 58.4 | 70.0 | 82.4 | 486 |
| Comparative Example 2 | b1 | | | 560 | | | | | | 57.6 | 69.9 | 80.7 | 482 |
| Comparative Example 3 | b2 | | | 560 | | | | | | 50.0 | 65.6 | 72.1 | 342 |

As shown in Table 3, Examples 1 to 9 of the present invention all exhibited higher compressive strength and slump flow at the short-term (age of 3 days), medium-term (age of 28 days), and long-term (age of 91 days) compared to Comparative Examples 1 to 3.

Therefore, the hydraulic composite of the present invention exhibits improved strength development and fluidity. As a result, the present invention opens up new uses for carbonated cement hydrate. Furthermore, because the carbonated cement hydrate absorbs and fixes carbon dioxide, the present invention contributes to reducing carbon dioxide emissions.

### 3. Example of Using Carbonated Cement Hydrate Slurry as Partial Replacement for Fine Aggregate

Concrete was produced using carbonated cement hydrate slurry a5 according to the formulation shown in Table 4 and in accordance with JIS A 1138, "Method of Making Test Sample of Concrete in the Laboratory". The slump flow of the concrete was measured in accordance with JIS A 1150, "Method of Test for Slump Flow of Concrete".
Furthermore, the compressive strength of the concrete was measured in accordance with JIS A 1108 "Method of Test for Compressive Strength of Concrete" by using concrete specimens cured underwater for ages of 3, 28, and 91 days. The results are shown in Table 4.

**[Table 4]**

| | Carbonated cement hydrate slurry | (W₁+W₂)/C₁ (%) | Unit amount (kg/m³) | | | | | | | Compressive strength (MPa) | | | Slump flow (mm) |
|---|---|---|---|---|---|---|---|---|---|---|---|---|---|
| | | | W₁ | C₁ | Carbonated cement hydrate slurry | | S | G | Ad (C × %) | Age of 3 days | Age of 28 days | Age of 91 days | |
| | | | | | W₂ | C₂ | | | | | | | |
| Example 10 | a5 | | 140 | 560 | 28 | 28 | 804 | | | 59.7 | 73.3 | 86.5 | 492 |
| Example 11 | | | 112 | | 56 | 56 | 776 | | | 60.5 | 74.9 | 87.2 | 497 |
| Example 12 | | 30 | 84 | | 84 | 84 | 748 | 887 | 1.2 | 61.4 | 76.1 | 88.4 | 503 |
| Example 13 | | | 56 | | 112 | 112 | 720 | | | 62.0 | 77.5 | 89.9 | 509 |
| Comparative Example 4 | - | | 168 | 560 | - | - | 832 | | | 58.4 | 70.0 | 82.4 | 486 |

As shown in Table 4, Examples 10 to 13 of the present invention all exhibited higher compressive strengths and slump flows at the short-term (age of 3 days), medium-term (age of 28 days), and long-term (age of 91 days) compared to Comparative Example 4. Therefore, as described above, the hydraulic composite of the present invention has improved strength development and fluidity, so the present invention opens up new uses for carbonated cement hydrate. Furthermore, since the carbonated cement hydrate absorbs and fixes carbon dioxide, the present invention contributes to reducing carbon dioxide emissions.

## Claims

1. A hydraulic composite comprising at least a carbonated cement hydrate slurry having a water/carbonated cement hydrate (in terms of solids) ratio of 50% to 1000%, a pH of 11 or less, and a viscosity at 20 ± 3°C of 1.0 mPa·s to 6.5 mPa·s, or a powder of the carbonated cement hydrate, and also cement, aggregate, and water.

2. The hydraulic composite according to claim 1, wherein the aggregate is fine aggregate alone, or fine aggregate and coarse aggregate.

3. The hydraulic composite according to claim 1 or 2, comprising at least 5 parts by mass to 50 parts by mass of the carbonated cement hydrate (in terms of solids) in the carbonated cement hydrate slurry or powder of the carbonated cement hydrate (in terms of solids), 250 parts by mass to 750 parts by mass of aggregate, and 25 parts by mass to 60 parts by mass of water, per 100 parts by mass of cement.

4. The hydraulic composite according to claim 3, wherein the fine aggregate accounts for 35% by mass to 65% by mass, with the total aggregate being 100% by mass.

5. The hydraulic composite according to claim 1 or 2, comprising at least 100 parts by mass of cement, 250 parts by mass to 750 parts by mass of aggregate, a carbonated cement hydrate slurry or powder of the carbonated cement hydrate, and water, wherein
the hydraulic composite contains at least 5 parts by mass to 30 parts by mass of the carbonated cement hydrate (in terms of solids) in the carbonated cement hydrate slurry or powder of the carbonated cement hydrate, and 25 parts by mass to 60 parts by mass of water, per 100 parts by mass of fine aggregate in the aggregate.

6. The hydraulic composite according to claim 1 or 2, wherein a compressive strength of the hydraulic composite at age of 3 days, age of 28 days, and age of 91 days is 0.5% or more higher than the compressive strength of a hydraulic composite not containing the carbonated cement hydrate slurry or powder of the carbonated cement hydrate.

7. The hydraulic composite according to claim 1 or 2, having a slump flow of 350 mm to 700 mm as measured in accordance with JIS A 1150 "Method of Test for Slump Flow of Concrete".

8. The hydraulic composite according to claim 1 or 2, containing a carbonated cement hydrate slurry or powder of the carbonated cement hydrate, which is obtained by fixing carbon dioxide emitted during the cement production process.
